# EUROPÄISCHE PATENTSCHRIFT

(11) **EP 3 328 765 B1**
(45) Veröffentlichungstag und Bekanntmachung des Hinweises auf die Patenterteilung: **20.01.2021**
(21) Anmeldenummer: 17732455.5
(22) Anmeldetag: 26.06.2017
(51) Int. Cl.: B65G 49/06, E06B 3/673, B23Q 7/14, B23Q 41/02

(54) **FÖRDERVORRICHTUNG**
CONVEYING APPARATUS
DISPOSITIF DE TRANSPORT

(30) Priorität: 12.07.2016 AT 506202016
(43) Veröffentlichungstag der Anmeldung: 06.06.2018
(73) Patentinhaber: LISEC Austria GmbH, 3353 Seitenstetten (AT)
(72) Erfinder: MADER, Leopold, 3364 Neuhofen/Ybbs (AT); HOLZKNECHT, Werner, 3251 Purgstall (AT)
(74) Vertreter: Beer & Partner Patentanwälte KG
(86) Internationale Anmeldenummer: PCT/EP2017/065678
(87) Internationale Veröffentlichungsnummer: WO 2018/010942

(56) Entgegenhaltungen:
- EP-A2- 0 727 556
- DE-A1-102013 102 431
- JP-A- 2003 192 127

## Beschreibung

Die Erfindung betrifft eine Vorrichtung zum Fördern von tafelförmigen oder plattenförmigen Bauteilen, insbesondere von Flachglasscheiben, mit den Merkmalen des Oberbegriffes von Patentanspruch 1.

Häufig ergibt sich ein Problem, wenn einzelne oder mehrere plattenförmige Bauteile, wie Glasscheiben, von aufeinanderfolgend transportierten Bauteilen zu bearbeiten sind, wogegen andere Bauteile der aufeinanderfolgend transportierten Bauteile ohne Bearbeiten weitertransportiert werden können. Durch den Zeitaufwand des Bearbeitens, beispielsweise das Ansetzen von Abstandhalterrahmen, das Applizieren von Abstandhaltern aus Kunststoff und/oder das Besäumen der Ränder von Glasscheiben beim Herstellen von Isolierglas, müssen die nicht zu bearbeitenden Bauteile (Glasscheiben) warten, bis der Bearbeitungsschritt an dem einzelnen Bauteil (der Glasscheibe) beendet ist.

Um dieses Problem zu lösen, ist es beim Herstellen von Isolierglas bereits vorgeschlagen worden, Glasscheiben aus der Transportebene quer zu ihrer Flächenerstreckung, also quer zur Transportebene, zu versetzen und in einem weiteren, parallel zum ersten Fördergang angeordneten, zweiten Fördergang so zu transportieren, dass sie die zu bearbeitende Glasscheibe überholen (vgl. EP 0 727 556 A2).

Aus AT 354 934 B ist es beim Zusammenbauen von Isolierglasscheiben bekannt, einzelne Glasscheiben quer zu ihrer Ebene aus der Förderbahnebene in eine Stellung abzuheben, in der ein Abstandhalter montiert werden kann, sodass die Förderbahn nicht blockiert ist.

Aus EP 2 964 863 A1 und EP 2 802 727 A1 sind Fördereinrichtungen für Glasscheiben bekannt, die rotierbare Anlagenteile, die auch als Pufferspeicher ausgebildet sein können, aufweisen, um Glasscheiben aus der Förderbahn zu bewegen. Dabei zeigt EP 2 802 727 A1 auch eine Vorrichtung, um Glasscheiben vor der drehbaren Zwischenstation aus der Förderebene quer zu ihrer Flächenerstreckung herauszuheben.

Das Versetzen von plattenförmigen Bauteilen, insbesondere von Glasscheiben, aus der Förderebene stellt, auch wenn die Förderebene im Wesentlichen lotrecht steht, einen nicht unbeträchtlichen Aufwand dar, weil zusätzlich zur ersten Förderebene eine zweite Förderebene mit seitlicher Abstützung und Fördermitteln am unteren Rand derselben erforderlich ist.

JP 2003192127 A offenbart eine Anordnung zum Fördern von plattenförmigen Gegenständen, wie Flachglas, wobei die Fördereinrichtungen zum Transportieren von Flachglas in zur Vertikalen geneigter Lage eingerichtet sind. In Fig. 9 ist eine Gesamt-Anlage gezeigt, die in Abs. beschrieben ist. Die Anlage umfasst mehrere Bearbeitungsstationen und Waschstationen. Die Bearbeitungsstationen sind in einem oberen Teil der Anlage und die Waschstationen sind in einem unteren Teil der Anlage vorgesehen. Die Bearbeitungsstationen werden durch Hebeeinrichtungen mit Flachglas beschickt. Bei der aus JP 2003192127 A bekannten Anordnung wird Flachglas, das von einer Hebeeinrichtung angehoben worden ist, nicht in Richtung der Förderer weiterbewegt. Vielmehr wird Flachglas wieder zu dem betroffenen Förderer nach unten bewegt.

WO 2004/048284 A1 zeigt das Abheben einer Glastafel von einer Fördereinrichtung. Allerdings wird die Glastafel in der "unteren Position" nicht bearbeitet. Im Gegenteil soll eine Glastafel nur bearbeitet werden, nachdem sie vom Linearförderer abgehoben wurde und von der Hebeeinrichtung gehalten wird.

Der Erfindung liegt die Aufgabe zugrunde, ein verbessertes und einfacher ausführbares Verfahren und eine Vorrichtung vorzuschlagen, welche die vorstehend genannten Probleme vermeiden.

Gelöst wird diese Aufgabe, was das Verfahren betrifft, mit einem Verfahren mit den Merkmalen von Patentanspruch 1.

Bei dem erfindungsgemäßen Verfahren und bei der erfindungsgemäßen, für das Durchführen des Verfahrens vorgeschlagenen Vorrichtung ergibt sich auch der Vorteil, dass die im Stand der Technik auftretenden Zeitverluste, die auftraten, weil weitere (zweite) Bauteile nicht weitergefördert werden konnten, also warten mussten, bis ein zu bearbeitender Bauteil fertig bearbeitet worden ist, vermieden werden können. So können die Taktzeiten verbessert werden.

Mit dem erfindungsgemäßen Verfahren ist es ohne Zeitverlust möglich, die Reihenfolge von herangeförderten Bauteilen zu ändern, so dass die Bauteile in einer gewünschten Reihenfolge weitergefördert werden können.

Mit dem erfindungsgemäßen Verfahren und mit der erfindungsgemäßen Vorrichtung kann in dem Bereich, in dem Bauteile angehalten und gegebenenfalls bearbeitet werden, nicht nur jeweils ein "erster" Bauteil, sondern es können auch zwei oder mehr als zwei Bauteile angehalten werden. Ebenso kann bei dem erfindungsgemäßen Verfahren und bei der erfindungsgemäßen Vorrichtung nicht nur ein "zweiter" Bauteil, sondern es können auch zwei oder mehr als zwei Bauteile an dem wenigstens einen ersten Bauteil vorbeibewegt werden.

Der im Vorliegenden verwendete Begriff "angehalten" umfasst auch ein geringfügiges Weiterbewegen des Bauteils mit geringer oder abnehmbarer Geschwindigkeit oder auch ein Bewegen des Bauteils, während er von einem Bearbeitungswerkzeug bearbeitet wird, wobei diese Bewegung auch nur während bestimmter Abschnitte des Bearbeitens ausgeführt werden kann. Wesentlich ist bloß, dass ein im oberen Förderweg befindlicher Bauteil so lange dort ist (steht oder bewegt wird), bis ein weiterer Bauteil im unteren Förderweg vorbeibewegt worden ist.

Der im Vorliegenden verwendete Begriff "weiterbewegen" umfasst Bewegungen der Bauteile, z.B. der Glasscheiben, in beide Richtungen.

Bei der Erfindung kann vorgesehen sein, dass die Bauteile von den Fördereinrichtungen nicht nur in Förderrichtung oder in eine entgegengesetzte Richtung gefördert (bewegt) werden, sondern auch angehalten werden, beispielsweise wenn sie bearbeitet werden sollen.

Bei der Erfindung ist es in Betracht gezogen, zusätzlich zu dem ersten Förderweg, in dem Bauteile durch die Vorrichtung bewegt werden, einen, zwei oder mehr als zwei zweite Förderwege vorzusehen. Dieser wenigstens eine zweite Förderweg ist oberhalb des ersten Förderweges der Bauteile vorgesehen.

Dabei kann vorgesehen sein, dass die Bauteile in den Förderwegen mit voneinander unabhängigen Geschwindigkeiten bewegt und voneinander unabhängig angehalten werden können. Hierzu sind die Fördereinrichtungen so eingerichtet und ausgebildet, dass Bauteile in den Förderwegen mit voneinander unterschiedlichen Geschwindigkeiten bewegt und voneinander unabhängig angehalten werden können.

Im Rahmen der Erfindung kann vorgesehen sein, dass wenigstens ein Bereich, in dem Bauteile bearbeitet werden, nicht nur im ersten (unteren) Förderweg, sondern auch im wenigstens einen zweiten (oberen) Förderweg vorgesehen ist. Bei dieser Ausführungsform kann vorgesehen sein, dass das Bearbeitungswerkzeug, das in der Bearbeitungsstation vorgesehen ist, aus dem wenigstens einen, im ersten Förderweg angeordneten Bereich in den wenigstens einen, im zweiten Förderweg liegenden Bereich angehoben wird, wenn ein Bauteil, der sich im zweiten Förderweg befindet, bearbeitet werden soll.

In einer Ausführungsform der Erfindung kann je wenigstens ein Bearbeitungswerkzeug im ersten Förderweg, im zweiten Förderweg und in wenigstens einem gegebenenfalls vorgesehenen weiteren Förderweg vorgesehen sein.

Insoweit die erfindungsgemäße Vorrichtung zum Durchführen des erfindungsgemäßen Verfahrens betroffen ist, wird diese Aufgabe mit einer Vorrichtung gelöst, welche die Merkmale des ersten Vorrichtungsanspruchs aufweist.

Bevorzugte und vorteilhafte Ausgestaltungen des erfindungsgemäßen Verfahrens und der erfindungsgemäßen Vorrichtung sind Gegenstand der Unteransprüche.

Da bei dem erfindungsgemäßen Verfahren der plattenförmige Bauteil, insbesondere eine Glasscheibe, beim Entfernen aus dem Förderweg in der Förderebene, also in der vom Bauteil definierten Ebene, bleibt und einfach in seiner Ebene versetzt wird, ergeben sich die Probleme beim Versetzen von plattenförmigen Bauteilen, wie Glasscheiben, quer zu ihrer Flächenerstreckung nicht mehr.

Wenn die Förderebene beim erfindungsgemäßen Verfahren im Wesentlichen lotrecht ist, wie dies für das Herstellen von Isolierglas üblich ist, kann die Glasscheibe, die eine zu bearbeitende Glasscheibe überholen soll, in der Förderebene verbleibend über die zu bearbeitende Glasscheibe angehoben und nach dem Überholen der zu bearbeitenden Glasscheibe immer noch in der Förderebene verbleibend wieder abgesenkt werden. Insoweit die Vorrichtung betroffen ist, ist eine Hebevorrichtung für einen Bauteil (Glasscheibe) vorgesehen, die den Bauteil (die Glasscheibe) bis zu einer oberhalb der ersten Fördereinrichtung angeordneten zweiten Fördereinrichtung anhebt und nach dem Überholen des zu bearbeitenden Bauteils (Glasscheibe) mit einer zweiten Hebeeinrichtung wieder absenkt, bis er auf der ersten Fördereinrichtung steht und weitertransportiert werden kann.

Um Schwierigkeiten beim Anheben bzw. Absenken eines Bauteils, insbesondere einer Glasscheibe, zu vermeiden, ist bevorzugt vorgesehen, dass die zweite Fördereinrichtung aus der Förderebene entfernbar, insbesondere nach hinten zurückziehbar, ausgebildet ist.

Im Rahmen der Erfindung sind weitgehend beliebige Bearbeitungswerkzeuge in Betracht gezogen. Beispielsweise Werkzeuge zum Ansetzen von Abstandhaltern für Isolierglas und Werkzeuge zum Besäumen von Glaszuschnitte. In Betracht gezogen ist auch im ersten Förderweg und in dem wenigstens einem weiteren Förderweg, verschiedene Bearbeitungswerkzeuge vorzusehen, um unterschiedliche Bearbeitungsschritte auszuführen.

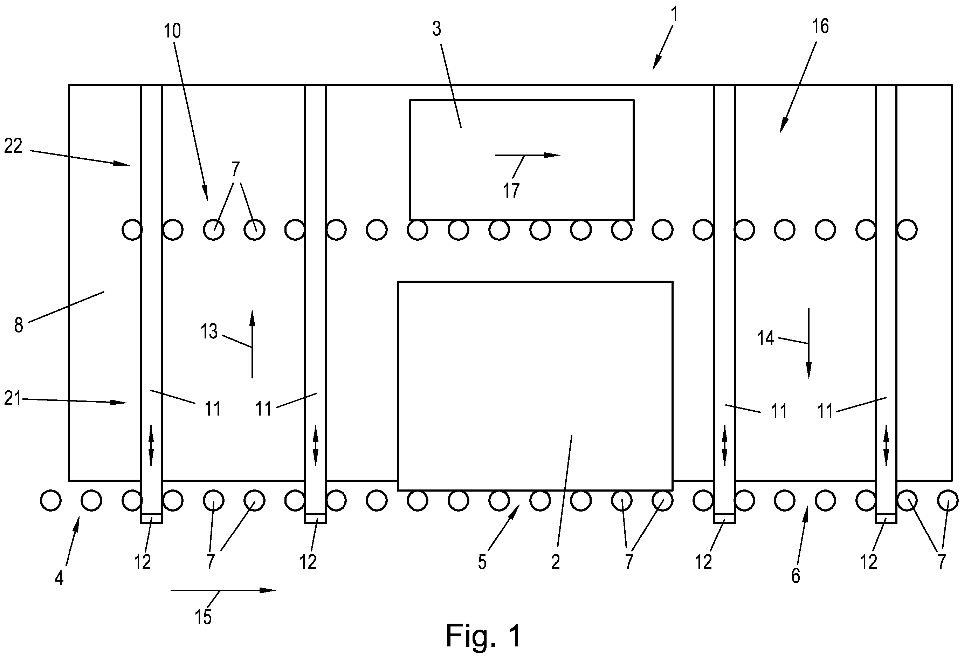

Weitere Einzelheiten und Merkmale der Erfindung ergeben sich aus der nachstehenden Beschreibung eines bevorzugten Ausführungsbeispieles anhand der angeschlossenen Zeichnungen. Es zeigt
- Fig. 1: schematisch eine erfindungsgemäße Vorrichtung zum Transport von Glasscheiben und
- Fig. 2: eine erfindungsgemäße Vorrichtung.

Eine Vorrichtung 1 zum Transportieren von Glasscheiben 2, 3 umfasst einen Zuförderer 4, einen Bereich 5, in dem eine Glasscheibe 2 zu bearbeiten ist, und einen Abförderer 6.

Die im Bereich 5 vorgesehene Bearbeitungsstation 20 kann beispielsweise eine Station zum Applizieren von Abstandhaltern, zum Ansetzen von Abstandhalterrahmen oder zum Besäumen der Ränder von Glasscheiben sein.

Entlang der gesamten Vorrichtung, also Zuförderer 4, Bereich 5 mit der Bearbeitungsstation 20 und Abförderer 6, ist ein Fördermittel, auf dem aufstehend Glasscheiben 2 entlang eines ersten Förderweges 21 transportiert werden, vorgesehen, das beispielsweise als Fördermittel mit Rollen 7, als Fördermittel mit Fördergurten oder als Kombinationen solcher Fördermittel ausgebildet ist.

Vom Fördermittel nach oben erstreckt sich eine Stützeinrichtung 8, beispielsweise eine Stützwand mit Luftkissen oder Rollen, an welcher die Glasscheiben 2 und 3 lehnend transportiert werden.

Im Bereich des Zuförderers 4 ist eine Einrichtung 10 zum Anheben von Glasscheiben 3 zu einer weiteren Fördereinrichtung 11 vorgesehen. Diese Einrichtung 10 zum Anheben kann beispielsweise zwei oder mehr als zwei Fördergurte aufweisen, an welchen Glieder 12, die über die Stützeinrichtung 8, beispielsweise durch Schlitze in der Stützwand, vorstehen, befestigt sind. Die Glieder 12 erfassen eine Glasscheibe 2 und heben diese durch entsprechendes Betätigen nach oben (Pfeil 13), sodass sie von dem Zuförderer 4 weg bis in einen zweiten Förderweg 22 angehoben wird.

Sobald die Glasscheibe 3 die gewünschte Höhe erreicht hat, werden die Fördermittel, z.B. Rollen 7, der weiteren Fördereinrichtung 11 ("obere Fördereinrichtung") aus ihrer Bereitschaftsstellung, in der sie über die Stützeinrichtung nicht vorstehen, in ihre Wirkstellung gebracht, d.h. gegenüber der Stützeinrichtung 8 vorgeschoben, und die Glasscheibe 3 auf die weitere, obere Fördereinrichtung 11 abgesetzt.

Durch Inbetriebnahme der oberen Fördereinrichtung 11 wird die Glasscheibe 3 am Bereich 5 bis zum Abförderer 6 vorbeibewegt und dort von einer weiteren Hebeeinrichtung 16 nach dem Zurückziehen der Fördermittel der oberen Fördereinrichtung 11 hinter die Stützeinrichtung 8 wieder auf die untere Fördereinrichtung im Bereich des Abförderers 6 abgesetzt (Pfeil 14) und aus der Vorrichtung 1 abtransportiert.

Während dieses Vorganges, bei dem eine weitere Glasscheibe 3 eine im Bereich 5 der Bearbeitungsstation 20 stehende, erste Glasscheibe 2 überholt, kann die erste Glasscheibe 2 bearbeitet werden.

Dieses Verfahren ist insbesondere beim Herstellen von Isolierglas vorteilhaft, wenn die erfindungsgemäße Vorrichtung 1 für den Transport von Glasscheiben 2, 3 vor einer Zusammenbaustation, die auch als Gasfüllpresse ausgebildet sein kann, angeordnet ist. Dann kann nämlich eine erste, herangeförderte Glasscheibe 2 im Bereich 5 mit einem Abstandhalterrahmen belegt werden oder es wird ein Kunststoffabstandhalter appliziert, während die zweite Glasscheibe 3, die dann mit der ersten, mit Abstandhalter versehenen Glasscheibe 2 zu einem Isolierglasrohling zusammengebaut wird, die erste Glasscheibe 2 überholend transportiert wird, sodass sie als erste in die Zusammenbaustation bzw. Gasfüllpresse gelangt und wie in Zusammenbaustationen und Gasfüllpressen üblich, aus der Förderebene wegbewegt gehalten wird, bis die erste Glasscheibe (mit Abstandhalter) herangefördert worden ist.

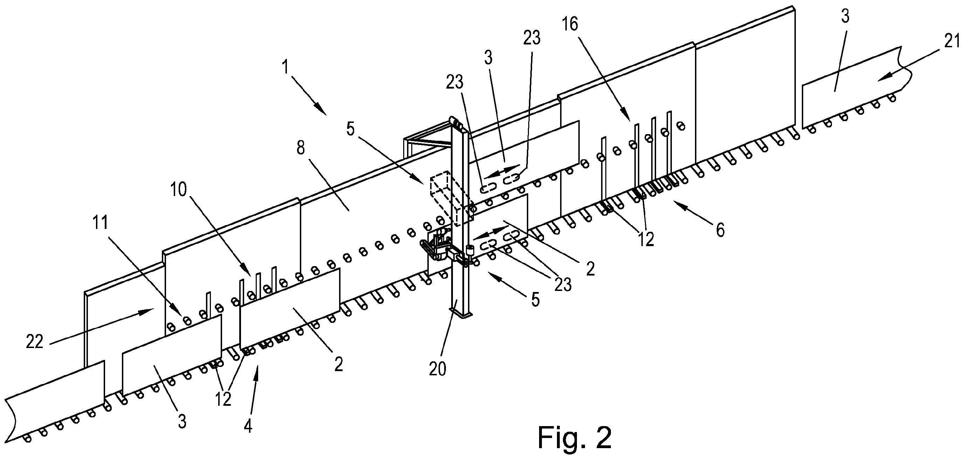

Bei der in Fig. 2 gezeigten Ausführungsform einer erfindungsgemäßen Vorrichtung 1 ist die im Bereich 5 vorgesehene Bearbeitungsstation 20 als Einrichtung 20 zum Applizieren von Abstandhaltern aus Kunststoff ausgebildet. In diesem Bereich 5 können beispielsweise als Saugköpfe 23 ausgebildete Mitnehmer vorgesehen sein, welche die Bewegungen der Glasscheibe 3 beim Applizieren von Abstandhaltern unterstützen.

In Fig. 2 ist gezeigt, dass auch in dem zweiten, oberen Förderweg 22 ein Bereich 5 vorgesehen sein kann, in dem eine Glasscheibe 3 bearbeitet werden kann. In diesem Fall ist vorgesehen, dass das Bearbeitungswerkzeug (Bearbeitungskopf), wie in Fig. 2 strichliert angedeutet, so weit nach oben bewegt werden kann, dass es in dem im zweiten Förderweg 22 liegenden Bereich 5 tätig werden kann. Alternativ kann in dem im zweiten Förderweg 22 liegenden Bereich 5 ein weiteres Bearbeitungswerkzeug vorgesehen sein. Auch im oberen Bereich 5 können beispielswiese als Saugköpfe 23 ausgebildete Mitnehmer vorgesehen sein.

Bei der in Fig. 2 gezeigten Ausführungsform umfasst die Hebeeinrichtung 10 und die weitere Hebeeinrichtung 16 jeweils mehr als zwei Fördergurte mit Gliedern 12, sodass auch längere Glasscheiben 3 vor dem Bereich 5 sicher angehoben und nach dem Bereich 5 sicher wieder abgesenkt werden können.

Mit der erfindungsgemäßen Vorrichtung kann auch so gearbeitet werden, dass eine Glasscheibe 3 oberhalb des Abförderers 6, auf den Hebegliedern 12 der nach dem Bereich 5 mit der Bearbeitungsstation angeordneten Absenkeinrichtung 16 im zweiten Förderweg 22 stehend, wartet, bis eine im Bereich 5 bearbeitete Glasscheibe 2 unter ihr vorbei zu einer nachgeschalteten Vorrichtung abgefördert worden ist. Dies kann insbesondere der Fall sein, wenn die nachgeschaltete Vorrichtung eine Zusammenbaustation zum Herstellen von Isolierglasrohlingen oder eine Gasfüllpresse, in der mit einem von Luft verschiedenen Gas gefüllte Isolierglasrohlinge hergestellt werden, ist und zusammengehörende Glasscheiben 2 und 3 benötigt werden.

Mit der erfindungsgemäßen Vorrichtung können bei aus der Wirkstellung zurückbewegtem oberen Förderer auch große (höhere) Scheiben, also Scheiben, die bis in den oberen Förderweg reichen, bearbeitet werden.

Überdies besteht die Möglichkeit, dass bestehende Anlagen nachgerüstet werden.

Zusammenfassend kann ein Ausführungsbeispiel der Erfindung wie folgt beschrieben werden:
In einer Vorrichtung 1 zum Fördern von Glasscheiben 2, 3 ist eine Fördereinrichtung, umfassend einen Zuförderer 4 und einen Abförderer 6, sowie ein Bereich 5 mit einer Bearbeitungsstation vorgesehen. Vor der Bearbeitungsstation ist eine Hebeeinrichtung 10 und nach der Bearbeitungsstation ist eine Absenkeinrichtung 16 für Glasscheiben vorgesehen, wobei zwischen der Hebeeinrichtung 10 und der Absenkeinrichtung 16 eine Linearfördereinrichtung 11 vorgesehen ist. So können Glasscheiben 3 durch Anheben (Pfeil 13), Linearbewegung (Pfeil 17) und Absenken (Pfeil 14) um einen im Bereich 5 in der Bearbeitungsstation stehenden ersten Bauteil herumbewegt werden, sodass der zweite Bauteil den ersten Bauteil überholt. Während des Überholvorganges bleibt der zweite Bauteil ständig in der Förderebene, die gleich der Ebene des zweiten Bauteils ist.

## Patentansprüche

1. Verfahren zum Fördern plattenförmiger Bauteile, insbesondere Glasscheiben (2, 3), wobei wenigstens ein erster Bauteil in einem Bereich (5) angehalten und gegebenenfalls bearbeitet wird und bei dem wenigstens ein zweiter Bauteil am ersten Bauteil vorbei bewegt wird, **dadurch gekennzeichnet, dass** plattenförmige Bauteile in einer im Wesentlichen lotrechten Förderebene verbleibend aus einem ersten Förderweg (21) quer zur Förderrichtung (Pfeil 17) in einen weiteren Förderweg (22) angehoben und quer zur Förderrichtung (Pfeil 17) in den ersten Förderweg (21) abgesenkt werden, dass die Bauteile in den Förderwegen (21, 22) mit voneinander unterschiedlichen Geschwindigkeiten bewegt werden, dass wenigstens ein Bauteil in wenigstens einem Bereich (5), der im ersten Förderweg (21) liegt, bearbeitet wird und dass der zweite Bauteil in seiner Ebene und in der Förderebene verbleibend quer zu der Förderrichtung (Pfeil 17), in welcher der zweite Bauteil herangefördert worden ist, aus einem ersten Förderweg (21) in einen zweiten Förderweg (22) angehoben wird, dass der zweite Bauteil an dem ersten Bauteil, der im Bereich (5) angehalten ist, im zweiten Förderweg (22) vorbei bewegt wird, indem der zweite Bauteil über den Bereich (5) hinweg in einer zur Förderrichtung parallelen Richtung gefördert wird, und dass der zweite Bauteil nach dem Bereich (5) wieder nach unten bewegt und dann abgefördert wird.

2. Verfahren nach Anspruch 1, **dadurch gekennzeichnet, dass** die Bauteile in einen von wenigstens zwei zweiten Förderwegen (22) angehoben werden.

3. Verfahren nach Anspruch 1 oder 2, **dadurch gekennzeichnet, dass** die Geschwindigkeiten, mit denen die Bauteile bewegt werden, zwischen Stillstand (0 m/min) und 200m/min liegen.

4. Verfahren nach einem der Ansprüche 1 bis 3, **dadurch gekennzeichnet, dass** die Bauteile in wenigstens einem Bereich (5), der im zweiten Förderweg (22) oder in einem der zweiten Förderwege (22) liegt, bearbeitet werden.

5. Verfahren nach Anspruch 4, **dadurch gekennzeichnet, dass** das Bearbeitungswerkzeug zum Bearbeiten eines Bauteils, der sich im zweiten Förderweg (22) befindet, aus dem im ersten Förderweg (22) liegenden Bereich (5) in einen Bereich (5), der im zweiten Förderweg (22) liegt, angehoben wird.

6. Vorrichtung zum Ausführen des Verfahrens nach einem der Ansprüche 1 bis 5, mit einer Fördereinrichtung, umfassend einen Zuförderer (4), einen Bereich (5) mit einer Bearbeitungsstation (20) und einen Abförderer (6), und mit einer, von der Fördereinrichtung im Wesentlichen lotrecht nach oben ragenden, Stützeinrichtung (8), insbesondere einer Stützwand, **dadurch gekennzeichnet, dass** der Stützeinrichtung (8), bezogen auf die Förderrichtung (Pfeil 15) vor dem Bereich (5) mit der Bearbeitungsstation (20), eine Vorrichtung (10) zum Anheben von zweiten Bauteilen und, bezogen auf die Förderrichtung (Pfeil 15) nach dem Bereich (5) mit der Bearbeitungsstation (20), eine Einrichtung (16) zum Absenken von zweiten Bauteilen zugeordnet ist, dass zwischen der Einrichtung (10) zum Heben und der Einrichtung (16) zum Absenken eine obere Fördereinrichtung (11) vorgesehen ist und dass die obere Fördereinrichtung (11) zwischen einer über die Stützeinrichtung (8) vorstehenden Wirkstellung und einer Bereitschaftsstellung verstellbar ist.

7. Vorrichtung nach Anspruch 6, **dadurch gekennzeichnet, dass** die obere Fördereinrichtung (11) wenigstens bereichsweise zwischen einer über die Stützeinrichtung (8) vorstehende Wirkstellung und einer Bereitschaftsstellung hinter der Stützeinrichtung (8) verstellbar ist.

8. Vorrichtung nach Anspruch 6 oder 7, **dadurch gekennzeichnet, dass** die Hebeeinrichtung (10) und die Absenkeinrichtung (16) an Bauteilen angreifend Glieder (12) aufweisen.

9. Vorrichtung nach Anspruch 8, **dadurch gekennzeichnet, dass** die Glieder (12) durch Bewegungsmittel, wie Fördergurte, anhebbar (Pfeil 13) bzw. absenkbar (Pfeil 14) sind.

10. Vorrichtung nach einem der Ansprüche 6 bis 9, **dadurch gekennzeichnet, dass** oberhalb des ersten Förderweges (21) wenigstens ein zweiter Förderweg (22) vorgesehen ist.

11. Vorrichtung nach Anspruch 10, **dadurch gekennzeichnet, dass** je wenigstens ein Bereich (5), in dem ein Bauteil bearbeitet wird, im ersten Förderweg (21) und im zweiten Förderweg (22) vorgesehen ist.

12. Vorrichtung nach Anspruch 10 oder 11, **dadurch gekennzeichnet, dass** das Bearbeitungswerkzeug der Bearbeitungsstation (20) in den Bereich (5), der in dem zweiten Förderweg (22) liegt, anhebbar ist.

13. Vorrichtung nach Anspruch 10 oder 11, **dadurch gekennzeichnet, dass** dem im ersten Förderweg (21) liegenden Bereich (5) und dem im zweiten Förderweg (22) liegenden Bereich (5) der Bearbeitungsstation je wenigstens ein Bearbeitungswerkzeug zugeordnet ist.

14. Vorrichtung nach einem der Ansprüche 6 bis 13, **dadurch gekennzeichnet, dass** die Fördermittel des Zuförderers (4), des Abförderers (6) und der Fördereinrichtung (11) zum Anhalten von Bauteilen und Fördern von Bauteilen mit unterschiedlichen Geschwindigkeiten und/oder in einander entgegengesetzte Richtungen ausgebildet sind.

## Claims

1. Method for conveying plate-shaped components, in particular glass panes (2, 3), wherein at least one first component is stopped in a region (5) and optionally processed and in which at least one second component is moved past the first component, **characterized in that** plate-shaped components are raised remaining in a substantially vertical conveying plane from a first conveying path (21) transversely to the conveying direction (arrow 17) into a further conveying path (22) and are lowered transversely to the conveying direction (arrow 17) into the first conveying path (21), **in that** the components are moved in the conveying paths (21, 22) at speeds differing from one another, **in that** at least one component is processed in at least one region (5) which lies in the first conveying path (21), and **in that** the second component is raised from a first conveying path (21) into a second conveying path (22) remaining in its plane and in the conveying plane transversely to the conveying direction (arrow 17) in which the second component has been conveyed up, **in that** the second component is moved past the first component, which is stopped in the region (5), in the second conveying path (22) by conveying the second component beyond the region (5) in a direction parallel to the conveying direction, and **in that** the second component is moved downwards again after the region (5) and then conveyed away.

2. Method according to claim 1, **characterized in that** the components are lifted into one of at least two second conveying paths (22).

3. Method according to claim 1 or 2, **characterized in that** the speeds at which the components are moved are between standstill (0 m/min) and 200 m/min.

4. Method according to one of claims 1 to 3, **characterized in that** the components are processed in at least one region (5) which lies in the second conveying path (22) or in one of the second conveying paths (22).

5. Method according to claim 4, **characterized in that** the processing tool for processing a component located in the second conveying path (22) is raised from the region (5) located in the first conveying path (22) into a region (5) located in the second conveying path (22).

6. Device for carrying out the method according to one of claims 1 to 5, having a conveying device comprising a feed conveyor (4), a region (5) with a processing station (20) and a discharge conveyor (6), and having a supporting device (8), in particular a supporting wall, projecting substantially vertically upwards from the conveying device, **characterized in that** the supporting device (8), relative to the conveying direction (arrow 15) before the region (5) with the processing station (20), is assigned a device (10) for lifting second components and, relative to the conveying direction (arrow 15) after the region (5) with the processing station (20), a device (16) for lowering second components, **in that** an upper conveying device (11) is provided between the device (10) for lifting and the device (16) for lowering, and **in that** the upper conveying device (11) is adjustable between an operative position projecting over the supporting device (8) and a standby position.

7. Device according to claim 6, **characterized in that** the upper conveying device (11) can be adjusted at least in some areas between an active position projecting over the supporting device (8) and a standby position behind the supporting device (8).

8. Device according to claim 6 or 7, **characterized in that** the lifting device (10) and the lowering device (16) have members (12) which engage on components.

9. Device according to claim 8, **characterized in that** the members (12) can be raised (arrow 13) or lowered (arrow 14) by means of moving means, such as conveyor belts.

10. Device according to one of claims 6 to 9, **characterized in that** at least one second conveying path (22) is provided above the first conveying path (21).

11. Device according to claim 10, **characterized in that** at least one region (5) each in which a component is processed is provided in the first conveying path (21) and in the second conveying path (22).

12. Device according to claim 10 or 11, **characterized in that** the processing tool of the processing station (20) can be lifted into the region (5) located in the second conveying path (22) .

13. Device according to claim 10 or 11, **characterized in that** at least one processing tool each is assigned to the region (5) of the processing station located in the first conveying path (21) and the region (5) of the processing station located in the second conveying path (22).

14. Device according to one of claims 6 to 13, **characterized in that** the conveying means of the feed conveyor (4), the discharge conveyor (6) and the conveying device (11) are designed to stop components and convey components at different speeds and/or in mutually opposite directions.

## Revendications

1. Procédés pour le transport d'éléments en forme de panneaux, en particulier de vitres (2, 3), dans lequel au moins un premier élément est retenu dans une zone (5) et éventuellement usiné et dans lequel au moins un deuxième élément est déplacé au-delà du premier élément, **caractérisé en ce que** des éléments en forme de panneaux sont soulevés en demeurant dans un plan de transport sensiblement vertical d'un premier trajet de transport (21) transversal par rapport au sens de transport (flèche 17) vers un autre trajet de transport (22) et abaissés transversalement par rapport au sens de transport (flèche 17) dans le premier trajet de transport (21), **en ce que** les éléments dans les trajets de transport (21, 22) sont déplacés à des vitesses différentes les uns des autres, **en ce qu'**au moins un élément est usiné dans au moins une zone (5) qui se trouve sur le premier trajet de transport (21) et **en ce que** le deuxième élément demeurant dans son plan et dans le plan de transport est soulevé transversalement par rapport au sens de transport (flèche 17) dans lequel le deuxième élément est acheminé, d'un premier trajet de transport (21) vers un deuxième trajet de transport (22), **en ce que** le deuxième élément est déplacé dans le deuxième trajet de transport (22) au-delà du premier élément qui est retenu dans la zone (5) par le fait que le deuxième élément est transporté au-delà de la zone (5) dans une direction parallèle au sens de transport, et **en ce que** le deuxième élément est à nouveau abaissé après la zone (5) puis évacué.

2. Procédé selon la revendication 1, **caractérisé en ce que** les éléments sont soulevés dans un parmi au moins deux deuxièmes trajets de transport (22).

3. Procédé selon la revendication 1 ou 2, **caractérisé en ce que** les vitesses auxquelles les éléments sont déplacés se situent entre l'arrêt (0 m/min) et 200 m/min.

4. Procédé selon l'une des revendications 1 à 3, **caractérisé en ce que** les éléments sont usinés dans au moins une zone (5) qui se trouve sur le deuxième trajet de transport (22) ou sur un des deuxièmes trajets de transport (22).

5. Procédé selon la revendication 4, **caractérisé en ce que** l'outil d'usinage pour l'usinage d'un élément qui se trouve dans le deuxième trajet de transport (22) est levé de la zone (5) qui se trouve sur le premier trajet de transport (22) à une zone (5) qui se trouve sur le deuxième trajet de transport (22).

6. Dispositif pour l'exécution du procédé selon l'une des revendications 1 à 5, avec une installation de transport comprenant un convoyeur d'arrivée (4), une zone (5) avec une station d'usinage (20) et un convoyeur d'évacuation (6) et avec une installation de support (8) dépassant de l'installation de transport vers le haut de façon sensiblement verticale, en particulier une paroi de support, **caractérisé en ce que** l'installation de support (8) est associée, devant la zone (5) comportant à la station d'usinage (20) par rapport au sens de transport (flèche 15), à un dispositif (10) pour soulever des deuxièmes éléments et, derrière la zone (5) comportant à la station d'usinage (20) par rapport au sens de transport (flèche 15), à une installation (16) pour abaisser des deuxièmes éléments, **en ce qu'**il est prévu entre l'installation (10) de levage et l'installation (16) d'abaissement une installation de transport supérieure (11) et **en ce que** l'installation de transport supérieure (11) peut être déplacée entre une position active dépassant au-dessus de l'installation de support (8) et une position de disponibilité.

7. Dispositif selon la revendication 6, **caractérisé en ce que** l'installation de transport supérieure (11) peut être déplacée au moins en partie entre une position active dépassant au-dessus de l'installation de support (8) et une position de disponibilité derrière l'installation de support (8).

8. Dispositif selon la revendication 6 ou 7, **caractérisé en ce que** l'installation de levage (10) et l'installation d'abaissement (16) présentent des segments (12) qui se mettent en prise sur les éléments.

9. Dispositif selon la revendication 8, **caractérisé en ce que** les segments (12) peuvent être levés (flèche 13) ou abaissés (flèche 14) par des moyens de déplacement tels que des courroies de transport.

10. Dispositif selon l'une des revendications 6 à 9, **caractérisé en ce qu'**au moins un deuxième trajet de transport (22) est prévu au-dessus du premier trajet de transport (21).

11. Dispositif selon la revendication 10, **caractérisé en ce qu'**au moins une zone (5) dans laquelle un élément est usiné est prévue respectivement dans le premier trajet de transport (21) et dans le deuxième trajet de transport (22).

12. Dispositif selon la revendication 10 ou 11, **caractérisé en ce que** l'outil d'usinage de la station d'usinage (20) peut être levé jusqu'à la zone (5) qui se trouve sur le deuxième trajet de transport (22).

13. Dispositif selon la revendication 10 ou 11, **caractérisé en ce que** la zone (5) de la station d'usinage qui se trouve sur le premier trajet de transport (21) et la zone (5) qui se trouve sur le deuxième trajet de transport (22) sont associées chacune à au moins un outil d'usinage.

14. Dispositif selon l'une des revendications 6 à 13, **caractérisé en ce que** les moyens de transport du convoyeur d'arrivée (4), du convoyeur d'évacuation (6) et de l'installation de transport (11) sont conçus pour retenir des éléments et transporter des éléments à des vitesses différentes et/ou dans des vitesses opposées les uns aux autres.
